# EUROPÄISCHE PATENTSCHRIFT

(11) **EP 2 583 748 B1**
(45) Veröffentlichungstag und Bekanntmachung des Hinweises auf die Patenterteilung: **15.07.2015**
(21) Anmeldenummer: 12185814.6
(22) Anmeldetag: 25.09.2012
(51) Int. Cl.: B01F 3/04, B01F 3/08, B01F 15/02, A23L 2/02, A23L 2/54, A23L 2/70

(54) **Verfahren zum Mischen von pulpe- und faserhaltige Getränke**
Mixing method for drinks containing pulp and fibre
Procédé de mélange pour boissons contenant des fibres et de la pulpe

(30) Priorität: 18.10.2011 DE 102011084720
(43) Veröffentlichungstag der Anmeldung: 24.04.2013
(73) Patentinhaber: Krones AG, 93073 Neutraubling (DE)
(72) Erfinder: Engel, Erwin, 93093 Donaustauf (DE)
(74) Vertreter: Grünecker Patent- und Rechtsanwälte PartG mbB

(56) Entgegenhaltungen:
- EP-A1- 2 514 327
- EP-A1- 2 524 900
- WO-A1-02/35947
- WO-A1-2009/154468
- DE-A1-102008 027 492
- DE-C1- 19 741 289
- GB-A- 2 072 027
- US-A- 1 781 435
- US-A- 2 565 374
- US-A- 2 929 731
- US-A- 3 565 404

## Beschreibung

### Gebiet der Erfindung

Die vorliegende Erfindung betrifft ein Verfahren zum Mischen eines pulpe- und/oder faserhaltigen Fluids.

### Stand der Technik

Getränkemixer sind in der Mehrheit als 2-Komponentenmixer ausgeführt, wobei ein zuvor bereiteter Fertigsirup mit entgastem Wasser gemischt und das entstehende Gemisch bei Bedarf zusätzlich gekühlt und beispielsweise mit CO₂, N₂O, N₂, O₂ versetzt wird. Das fertige Getränk wird einer Füllmaschine bzw. Erhitzeranlage zugeführt.

Die beschriebenen Maschinen werden nach dem Stand der Technik unter Verwendung von Kreiselpumpen, Regel- und Absperrventilen sowie Plattenwärmetauschern ausgeführt. Diese Bauteile stehen einer Verarbeitung von Getränken mit Feststoffanteil im Wege, da sie die festen Bestandteile wie beispielsweise Fruchtfleischstücke entweder nicht tolerieren (aufgrund geringer Spaltweiten) oder sogar zerstörend auf diese festen Bestandteile, insbesondere Fasern wirken. Die genannten Förder- und Regelorgane sind immer dann notwendig, wenn in hydraulisch gekoppelten Systemen eine Förderaufgabe mit zusätzlicher Druckerhöhung zu lösen ist, beispielsweise um ein Gas in das Getränk einzubringen.

Das Dokument DE 19741289 C1 offenbart ein Verfahren und eine Vorrichtung zur Herstellung von Fruchtzubereitungen, wobei die Vorrichtung eine Verdrängerpumpe aufweist, die aufgrund ihres Arbeitsprinzips eine schonende Förderung bewirkt.

Weiterhin ist speziell im Bereich der feststoffhaltigen Produkte zu beobachten, dass tendenziell höherpreisige Produkte mit eher kleineren Chargen produziert werden. Dadurch ergeben sich häufige Produktwechsel mit den entsprechenden Verlusten durch Mischungszonen. Die ausgeführten Behältervolumina reichen in der Regel nicht aus, um z.B. den Inhalt einer kompletten Sirupleitung in einem Zuge vorzuschieben oder auszuschieben. Dies ist jedoch hinsichtlich einer minimal gehaltenen Vermischungszone wünschenswert, es hilft, die Unzulänglichkeiten der bauseitigen Installation auszugleichen, vermeidet Stillstände bei kurzzeitigem Ausfall der Sirupzufuhr und vermeidet eine Verfälschung der Dosierung bei schwankenden Zulaufverhältnissen. Weiterhin bieten die genannten Maschinen keinen Mechanismus, der sicherstellt, dass der Sirup-Inhalt der Sirupzuleitung wirklich zu 100% ausgenutzt werden kann. Hierzu wäre es nötig, die komplette Mischungszone von Wasser auf Sirup und zurück plus eine bestimmte Wassermenge zusätzlich als "Sirup" zu akzeptieren.

Bei heute gebauten Anlagen wird außerdem immer öfter verlangt, dass die Vermischungsmengen von Produktausschüben nachgelagerter Anlagenteile nicht zu verwerfen sind, sondern dem Produktentstehungszweig an geeigneter Stelle wieder beizugeben sind. Auch diese Arbeitsweise wird von den heute gängigen Mixern nicht beherrscht, ist aber speziell bei feststoffhaltigen Produkten immer erwünscht.

Ein weiterer Betreiberwunsch geht dahin, den CO₂ Verbrauch der Karbonisiereinrichtung möglichst zu minimieren, insbesondere bei diskontinuierlicher Betriebsweise oder der Verarbeitung von Gebinden, welche zu einer Produktabnahme führen, die unterhalb des Regelbereichs des Mixers liegt. Dieser Anspruch kollidiert in den gängigen Maschinen regelmäßig mit der Eigenschaft, den Produktbehälter als Leerpuffer zu betreiben zusammen mit der Eigenschaft der Frischgaszugabe beim Imprägniergas.

Angesichts dieser Nachteile des Stands der Technik ist es eine Aufgabe der vorliegenden Erfindung, ein Verfahren zum Mischen eines pulpe- und/oder faserhaltigen Fluids zur Verfügung zu stellen, das produktschonend und effizient ist.

### Beschreibung der Erfindung

Die oben genannte Aufgabe wird gelöst durch ein Verfahren entsprechend Anspruch 1 zum Mischen eines pulpe- und/oder faserhaltigen Fluids, wobei das Fluid ein Getränk ist, mittels scherfreiem Bewegen des Fluids. Eine Beeinträchtigung der Pulpe- und/oder Faserdimensionen durch sich gegeneinander bewegende Kanten der herkömmlichen Mittel zum Bewegen des pulpe- und/oder faserhaltigen Fluids wird auf diese Weise vermieden.

Die Mittel zum scherfreien Bewegen des Fluids umfassen eine erste Verdrängerpumpe, insbesondere eine erste Kolben- oder Schraubspindelpumpe. Somit kann beispielsweise auf üblicherweise eingesetzte Kreiselpumpen verzichtet werden, die Scherstellen aufweisen und Fasern durchtrennen können. Eine Verdrängerpumpe ist dagegen frei von derartigen Scherstellen und kann beispielsweise als Kolbenpumpe oder als Schraubspindelpumpe ausgeführt sein.

Die Mittel zum scherfreien Bewegen des Fluids umfassen weiterhin eine zweite Verdrängerpumpe, insbesondere eine zweite Kolben- oder Schraubspindelpumpe; wobei die erste oder die zweite Verdrängerpumpe als Schubpumpe und die zweite bzw. die erste Verdrängerpumpe als Bremspumpe betrieben werden, wodurch im Betrieb der Vorrichtung eine Druckerhöhung des Fluids zwischen beiden Verdrängerpumpen erzielt wird. Somit lässt sich pulpe- bzw. faserschonend ein Druckerhöhung erzielen (z.B. zur Karbonisierung) ohne Kreiselpumpen zu verwenden, die in diesem Fall mit hohen Drehzahlen betrieben werden müssten, was sich schädigend auf das Produkt, nämlich das pulpe- und/oder faserhaltigen Fluid, auswirkt.

Mittel zum Einbringen eines Gases in das im Betrieb der Vorrichtung zwischen der ersten und der zweiten Verdrängerpumpe befindliche Fluid, insbesondere Mittel zum Karbonisieren des Fluids, sind vorgesehen. Auf diese Weise wird ein Gas, wie etwa CO₂ in das Fluid eingebracht. Dieses Mittel umfasst in der Regel eine Dosierleitung. Wenn mehrere Gase zugeführt werden sollen sind entsprechend mehrere Dosierleitungen vorgesehen.

Die erste und die zweite Verdrängerpumpe können regelventilfrei sein. Durch den Verzicht auf Regelventile können weitere pulpe- oder faserschädigende Wirkungen, die auf geringen Spaltweiten beruhen, vermieden werden.

Gemäß einer anderen Weiterbildung das pulpe- und/oder faserhaltige Fluid zumindest aus Wasser, insbesondere entgastem Wasser, und ein oder mehreren pulpe- und/oder faserhaltigen Komponenten gemischt werden.

Einer andere Weiterbildung kann den Schritt umfassen: Aufnehmen wenigstens eines Teils des pulpe- und/oder faserhaltigen Fluids in einem Mischungsbehälter, wobei der Mischungsbehälter einen Zulauf und einen Ablauf aufweist über die eine Zirkulation des Fluids erfolgt, insbesondere wobei der Ablauf über eine Rückleitung mit einer Umwälzpumpe mit dem Zulauf verbunden ist. Hierdurch wird ein Absetzen der Pulpe verhindert und die Rührfunktion bereits bei geringen Füllständen ermöglicht. Die angebaute Umwälzeinrichtung hält auch feste Bestandteile immer in der Schwebe und homogenisiert den Inhalt des Behälters.

Das Verfahren kann zudem ein Zuführen von Wasser als eine Eingangskomponente des Fluids und ein Kühlen des Wassers umfassen. Die Anordnung des Kühlers im Wasserzweig verlegt die Kühlungsaufgabe an einen Punkt, wo keine Pulpe und Fasern vorkommen. Dadurch wird die Verwendung von teuren Röhrenapparaten vermieden, die im Gemischbereich nach dem Stand der Technik notwendig wären.

Gemäß einer Weiterbildung kann das Verfahren weiterhin ein Aufnehmen einer pulpe- und/oder faserhaltigen Eingangskomponente des Fluids in einem Vorlaufbehälter umfassen, wobei der Vorlaufbehälter so bemessen sein kann, dass der vollständige Inhalt einer Dosierleitung für die pulpe- und/oder faserhaltige Eingangskomponente darin aufgenommen wird, wobei die Dosierleitung zwischen dem Vorlaufbehälter und einem Eintrittspunkt an der Rückleitung vorgesehen ist, und wobei der Eintrittspunkt vorzugsweise ein Eintrittsventil ist. Somit kann beim An- und Abfahren der Anlage der Behälter aufgrund seiner Größe beispielsweise die Vermischungszonen von Sirup mit Wasser plus einer bestimmten Menge reinen Wassers aufnehmen. In beiden Fällen ist neben dem Inhalt der Dosierleitung (Sirupleitung) auch der Inhalt des Behälters nutzbar. In einer anderen Weiterbildung kann das Verfahren zudem ein Anordnen einer Austragspumpe in einer solchen Höhe umfassen, dass im Betrieb der Vorrichtung andere fluidführende Bestandteile der Vorrichtung zur Austragspumpe hin leerlaufen können. Dadurch wird sichergestellt, dass die Vorrichtung im Wesentlichen restfrei geleert werden kann.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Zeichnungen

- Figur 1: stellt eine erste beispielhafte Vorrichtung zum Verständnis der Erfindung dar.
- Figur 2: stellt eine zweite beispielhafte Vorrichtung zum Durchführen des erfindungsgemäßen Verfahrens dar.
- Figur 3: stellt eine dritte beispielhafte Vorrichtung zum Durchführen des erfindungsgemäßen Verfahrens dar.
- Figur 4: stellt eine vierte beispielhafte Vorrichtung zum Durchführen des erfindungsgemäßen Verfahrens dar.

### Ausführungsformen

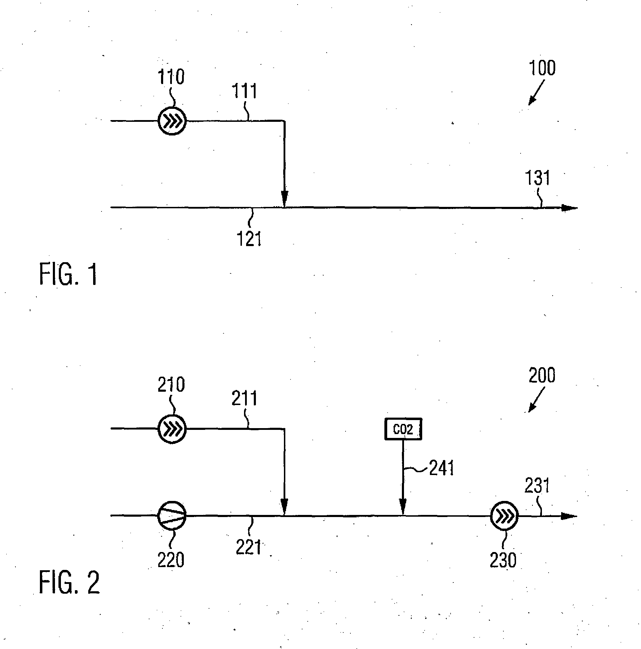

Figur 1 zeigt eine erste beispielhafte Vorrichtung 100. Die Vorrichtung 100 zum Mischen eines pulpe- bzw. faserhaltigen Fluids umfasst in diesem Fall eine Leitung 121 zur Wasserzufuhr. Diesem Wasser wird dann aus einer Leitung 111 Fruchtfleisch enthaltender Sirup beigemischt. Dieser Sirup wird mittels einer Verdrängerpumpe 110, z.B. in Form einer Schraubenspindelpumpe, befördert. Das gemischte Fruchtsaftgetränk wird dann über den Leitungsabschnitt 131 weitergeführt, beispielsweise zu einer Abfüllanlage.
Figur 2 zeigt eine zweite Vorrichtung 200. Der darin dargestellte Gertränkemixer 200 weist neben den in Figur 1 gezeigten Komponenten eine Pumpe 220 für das (vorzugsweise entgaste) Wasser auf, wobei die Pumpe 220 hier als Kreiselpumpe 220 ausgeführt ist. Weiterhin ist eine zweite Verdrängerpumpe 230 zum Weiterbefördern des gemischten Fluids vorgesehen. Zwischen den Pumpen 210 und 230 wird dem Fluid über eine Leitung 241 CO₂ zugeführt, also eine Karbonisierung durchgeführt. Es wird zwischen den beiden Pumpen 210 und 230 (und auch über die Pumpe 220) ein Druck aufgebaut, indem die erste Pumpe 210 auf Schubwirkung und die zweite Pumpe 230 auf Bremswirkung gefahren werden. Auf diese Weise kann das Fluid das Kohlendioxid aufnehmen.

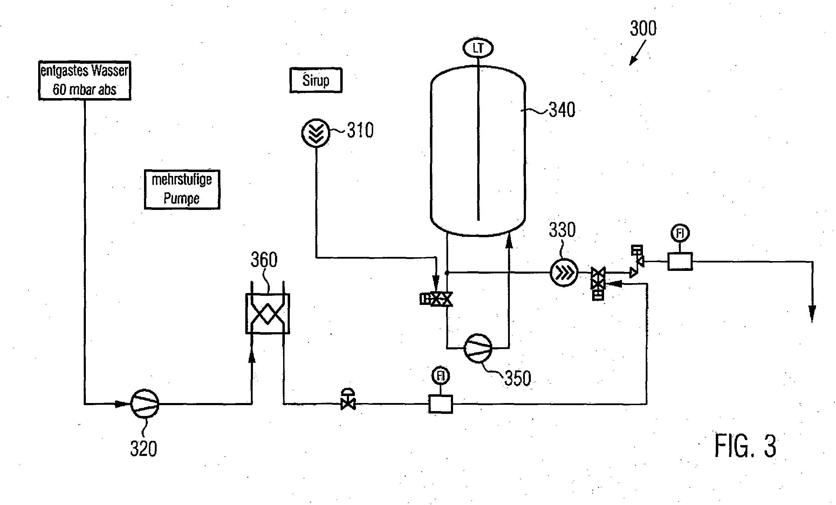

Figur 3 zeigt eine dritte Vorrichtung 300. Gegenüber den Beispielen gemäß Figuren 1 und 2 ist hier insbesondere ein Mischungsbehälter 340 vorgesehen. Eine weitere Pumpe 350 sorgt für eine Zirkulation des gemischten pulpe- oder faserhaltigen Fluids, wobei diese Pumpe auch als Kreiselpumpe ausgeführt sein kann, da diese mit niedrigen Drehzahlen betrieben wird, und so eine faserzerstörende Wirkung nicht oder nur unwesentlich vorhanden ist. Desweiteren ist eine Kühlvorrichtung 360 zum Kühlen des zugeführten entgasten Wassers vorgesehen. Verschiedene nicht näher beschriebene Ventile stellen hier die Verbindung von einzelnen Rohrleitungen dar.

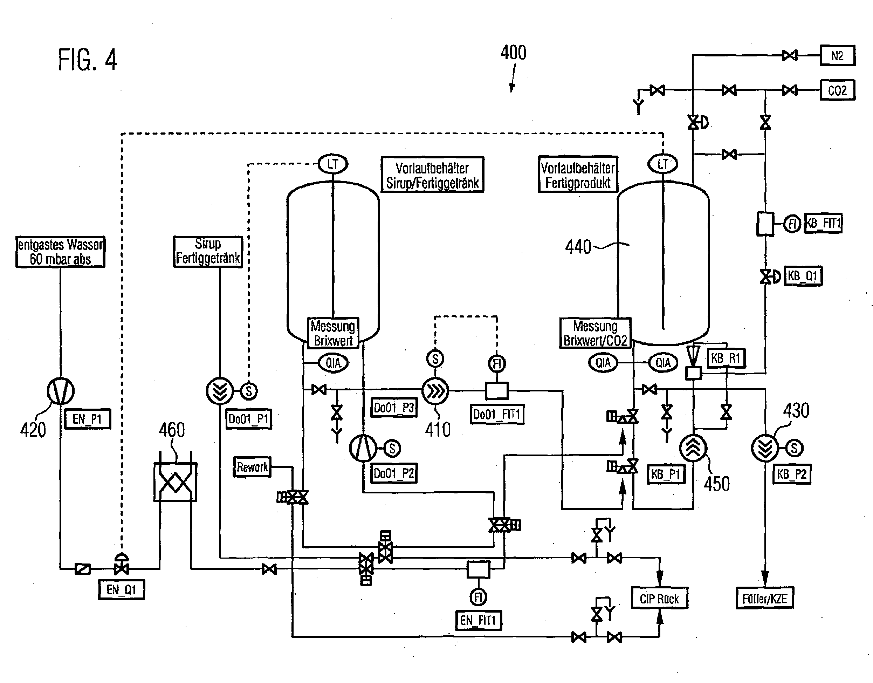

Figur 4 zeigt eine vierte Vorrichtung 400. Gegenüber dem Beispiel nach Figur 3 sind hier weitere Komponenten vorgesehen.

Zusammenfassend ist festzuhalten, dass der Verzicht auf Regelventile zur Produktsteuerung sowie die Verwendung von Verdrängerpumpen an Stellen, wo eine Druckerhöhung nötig ist, eine Beeinträchtigung der Pulpe- und Faserdimensionen vermeidet.

Kreiselpumpen werden erfindungsgemäß nur da eingesetzt, wo es gilt, unter Aufbau geringster Drücke lediglich umzuwälzen. Dadurch können diese sehr langsam laufen und schädigen das Produkt deshalb nicht.

Mit nur zwei Öffnungen am Behälterboden wird Zulauf, Ablauf und Zirkulation gewährleistet, wobei die Zirkulation ein wichtiger Funktionsbaustein ist und die sonst verwendeten Rührwerke ersetzt. Hierdurch wird ein Absetzen der Pulpe verhindert und die Rührfunktion bereits bei so geringen Füllständen ermöglicht, dass ein Betrieb eines Rührwerks noch nicht gestattet ist.

Die Anordnung des Kühlers im Wasserzweig verlegt die Kühlungsaufgabe an einen Punkt, wo keine Pulpe und Fasern vorkommen und vermeidet dadurch die Verwendung von teuren Röhrenapparaten, die im Gemischbereich notwendig wären.

Die gezeigte Anordnung garantiert, dass keine der Verdrängerpumpen in irgendeiner Betriebsart hydraulisch "auf Block" fahren kann. Es steht immer ein entsprechender Windkessel zur Verfügung. Damit kann auch an solchen Stellen auf produktschädigende Kreiselpumpen verzichtet werden, wo sie ansonsten aufgrund hydraulischer Eigenschaften unverzichtbar wären.

Der vergrößerte Sirupvorlaufbehälter kann den kompletten Inhalt der Sirupleitung aufnehmen. Die angebaute Umwälzeinrichtung hält auch feste Bestandteile immer in der Schwebe und homogenisiert den Inhalt des Behälters, so dass Schwankungen im Sirup auf einen Gradienten gebracht werden, der von der Dosiereinrichtung ausgeregelt werden kann.

Beim An- und Abfahren der Anlage kann der Behälter aufgrund seiner Größe die Vermischungszonen von Sirup mit Wasser plus einer bestimmten Menge reinen Wassers aufnehmen und bietet die Möglichkeit, den Inhalt des Tanks in Richtung des Originalsirups anzufetten (Produktionsbeginn) oder auf Getränkestärke herunter zu verdünnen (Produktionsende). In beiden Fällen ist außer dem Inhalt der Sirupleitung auch der Inhalt des Behälters jeweils zu 100% nutzbar, es entstehen keinerlei Verwurfsmengen.

Die Auswahl der Messgeräte für den Brixwert (Maß für die lösliche Trockensubstanz in der Flüssigkeit) stellt sicher, dass auch ein Light-Sirup bzw. -Produkt so exakt gemessen werden kann, dass mit den gewonnenen Messwerten eine Steuerung des Mischungsverhältnisses möglich ist.

Die Anordnung der Verrohrung und der Pumpen an den Behältern ist so gestaltet, dass die Austragspumpe am tiefsten Punkt sitzt und alle anderen Teile dieser Baugruppe dahin leerlaufen können. Dadurch wird sichergestellt, dass die Baugruppe praktisch restfrei leergeschöpft werden kann (Haftmengen ausgenommen).

Durch die Verwendung von Verdrängerpumpen im Sirupauslauf wird auch beim letzten Produktausschub die Vermischungszone minimiert. Wird die Mischung entsprechend gesteuert, so lässt sich sogar in diesem Anlagenteil eine komplette Sirupfreispülung erreichen, indem die Dosage kurz vor Ende des Schöpfvorgangs angefettet wird, um sofort danach mit zusätzlichem Wasser auszugleichen. Dies kann so erfolgen, dass die Sirupleitung bis hinter den Dosierpunkt völlig frei von Sirup wird.

Durch die Anordnung der Dosierleitungen für flüssige und gasförmige Bestandteile ist sichergestellt, dass jederzeit irgendeine der beteiligten Komponenten nachdosiert werden kann. Dies erhöht die Produktionssicherheit entscheidend.

Durch den gezeigten Anbau einer Imprägniervorrichtung werden 3 Effekte erzielt. 1. Der Behälter kann mit Gemisch befüllt werden, der verbleibende kleine Gasraum kann mit geringstem Einsatz an C02 oder einem anderen Spanngas luftfrei gespült werden. 2. Die Imprägnierung kann mit Gas aus dem Kopfraum erfolgen, wodurch im Minderleistungsbetrieb das Atmen des Behälters und damit ein C02-Verlust weitgehend reduziert werden kann. 3. Durch die Umwälzung wird das Produkt stark vermischt, Regelvorgänge werden geglättet und bei Nachdosiervorgängen wird der Behälterinhalt anschließend homogenisieht Bei Anlagenstillstand kann der Inhalt des Behälters intervallweise aufgerührt werden.

Bei Verarbeitung nur stiller Produkte können die beteiligten Behälter drucklos ausgeführt sein, eine Abschottung gegen das Eindringen von Außenluft ist jedoch notwendig. In diesem Fall kann die Umwälzpumpe des Produktbehälters als Kreiselpumpe ausgeführt sein, um die genannten Effekte 1 und 3 aus der obigen Aufzählung zu ermöglichen.

Mit der in Figur 4 gezeigten Anordnung kann Rework, also beim Betrieb anfallende Mischphasen, mit unbekannten, auch schwankenden Eigenschaften problemlos mitverarbeitet werden. Es entfällt auf dieser Seite die Notwendigkeit zur Homogenisierung des Reworkanteils. Die gezeigte Anordnung beherrscht außerdem die Arbeitsweise, Rework unbekannter Stärke mit Wasser und/oder Sirup (bzw. überfettetem Fertigprodukt) zu verarbeiten.

Durch die gezeigte Anordnung ist es schließlich möglich, die Zuleitungen für Sirup und Rework als Zufuhr für die CIP Flüssigkeit zu verwenden bzw. in einem eigenen CIP Kreislauf zu reinigen, wobei die benötigte Medientrennung gewährleistet ist.

Eine weitere Eigenschaft ist in der Anordnung nicht gezeigt, nämlich das Verfahren, die Produktleitung streckenweise als Doppelrohr auszuführen, wodurch eine weitere Kühlung bzw. Kühlhalturig bei Stillstand gewährleistet werden kann.

## Patentansprüche

1. Verfahren zum Mischen eines pulpe- und/oder faserhaltigen Fluids, wobei das Fluid ein Getränk ist, umfassend:
Scherfreies Bewegen des Fluids mittels einer ersten und einer zweiten Verdrängerpumpe (210, 230), wobei die erste oder die zweite Verdrängerpumpe als Schubpumpe und die zweite bzw. die erste Verdrängerpumpe als Bremspumpe betrieben wird, wodurch eine Druckerhöhung des Fluids zwischen beiden Verdrängerpumpen erzielt wird, und
Einbringen eines Gases in das zwischen der ersten und der zweiten Verdrängerpumpe befindliche Fluid.

2. Verfahren nach Anspruch 1, wobei die erste Verdrängerpumpe eine erste Kolben- oder Schraubspindelpumpe umfasst.

3. Verfahren nach Anspruch 1 oder 2, wobei die zweite Verdrängerpumpe eine zweite Kolben- oder Schraubspindelpumpe umfasst.

4. Verfahren nach einem der Ansprüche 1 bis 3,
wobei das Einbringen eines Gases ein Karbonisieren des Fluids umfasst.

5. Verfahren nach einem der Ansprüche 1 bis 4, wobei die erste und die zweite Verdrängerpumpe regelventilfrei sind.

6. Verfahren nach einem der Ansprüche 1 bis 5, wobei das pulpe- und/oder faserhaltige Fluid zumindest aus Wasser und ein oder mehreren pulpe- und/oder faserhaltigen Komponenten gemischt wird.

7. Verfahren nach einem der Ansprüche 1 bis 6, weiterhin umfassend: Aufnehmen wenigstens eines Teils des pulpe- und/oder faserhaltigen Fluids in einem Mischungsbehälter (340), wobei der Mischungsbehälter einen Zulauf und einen Ablauf aufweist über die eine Zirkulation des Fluids erfolgt, insbesondere wobei der Ablauf über eine Rückleitung mit einer Umwälzpumpe mit dem Zulauf verbunden ist.

8. Verfahren nach einem der Ansprüche 1 bis 7, weiterhin umfassend: Zuführen von Wasser als eine Eingangskomponente des Fluids und Kühlen des zugeführten Wassers.

9. Verfahren nach einem der Ansprüche 1 bis 8, weiterhin umfassend: Aufnehmen einer pulpe- und/oder faserhaltigen Eingangskomponente des Fluids in einem Vorlaufbehälter, insbesondere wobei in Kombination mit Anspruch 7 der Vorlaufbehälter so bemessen ist, dass der vollständige Inhalt einer Dosierleitung für die pulpe- und/oder faserhaltige Eingangskomponente darin aufgenommen wird, wobei die Dosierleitung zwischen dem Vorlaufbehälter und einem Eintrittspunkt an der Rückleitung vorgesehen ist, und wobei der Eintrittspunkt vorzugsweise ein Eintrittsventil ist.

10. Verfahren nach einem der Ansprüche 1 bis 9, weiterhin umfassend: Anordnen einer Austragspumpe in einer solchen Höhe, dass fluidführende Bestandteile zur Austragspumpe hin leerlaufen können.

## Claims

1. Method of mixing a pulp- and/or fiber-containing fluid, wherein the fluid is a beverage, comprising:
moving the fluid free from shearing with a first and a second positive-displacement pump (210, 230), wherein the first or the second positive-displacement pump is operated as a pushing pump, and the second or the first positive-displacement pump is operated as a braking pump, whereby a pressure increase between the two positive-displacement pumps is achieved, and
introducing a gas into the fluid located between the first and the second positive-displacement pumps.

2. Method according to claim 1, wherein the first positive-displacement pump comprises a first piston or screw pump.

3. Method according to claim 1 or 2, wherein the second positive-displacement pump comprises a second piston or screw pump.

4. Method according to one of claims 1 to 3,
wherein introducing a gas into the fluid comprises carbonating the fluid.

5. Method according to one of claims 1 to 4, wherein the first and the second positive-displacement pumps are free from control valves.

6. Method according to one of claims 1 to 5, wherein the pulp- and/or fiber-containing fluid is mixed at least from water and one or several pulp- and/or fiber-containing components.

7. Method according to one of claims 1 to 6, furthermore comprising: receiving at least a part of the pulp- and/or fiber-containing fluid in a mixing container (340), wherein the mixing container comprises an inlet and an outlet via which a circulation of the fluid is effected, in particular wherein the outlet is connected to the inlet via a return conduit with a circulation pump.

8. Method according to one of claims 1 to 7, furthermore comprising: supplying water as an input component of the fluid and cooling the supplied water.

9. Method according to one of claims 1 to 8, furthermore comprising: receiving a pulp- and/or fiber-containing input component of the fluid in a presettling tank, in particular wherein, in combination with claim 7, the presettling tank is dimensioned such that the complete contents of a dosing conduit for the pulp- and/or fiber-containing input component can be received therein, wherein the dosing conduit is provided between the presettling tank and an inlet point at the return conduit, and wherein the inlet point preferably is an inlet valve.

10. Method according to one of claims 1 to 9, furthermore comprising: disposing a discharge pump at such a height that fluid-carrying components can run empty towards the discharge pump.

## Revendications

1. Procédé pour mélanger un fluide renfermant de la pulpe et/ou des fibres, le fluide étant une boisson, le procédé comprenant :
la mise en mouvement du fluide, sans cisaillement, au moyen d'une première et d'une deuxième pompe volumétrique (210, 230), la première ou la deuxième pompe volumétrique fonctionnant en tant que pompe de poussée et la deuxième respectivement la première pompe volumétrique en tant que pompe de ralentissement, en permettant ainsi d'engendrer une augmentation de pression du fluide entre les deux pompes volumétriques, et
l'introduction d'un gaz dans le fluide se trouvant entre la première et la deuxième pompe volumétrique.

2. Procédé selon la revendication 1, d'après lequel la première pompe volumétrique comprend une première pompe à pistons ou pompe à vis ou broche hélicoïdale.

3. Procédé selon la revendication 1 ou la revendication 2, d'après lequel la deuxième pompe volumétrique comprend une deuxième pompe à pistons ou pompe à vis ou broche hélicoïdale.

4. Procédé selon l'une des revendications 1 à 3, d'après lequel l'introduction d'un gaz comprend une carbonatation du fluide.

5. Procédé selon l'une des revendications 1 à 4, d'après lequel la première et la deuxième pompe volumétrique sont exemptes de vanne de régulation.

6. Procédé selon l'une des revendications 1 à 5, d'après lequel le fluide renfermant de la pulpe et/ou des fibres est mélangé à partir d'eau et d'un ou plusieurs composants renfermant de la pulpe et/ou des fibres.

7. Procédé selon l'une des revendications 1 à 6, comprenant en outre : la réception d'au moins une partie du fluide renfermant de la pulpe et/ou des fibres dans une réservoir de mélange (340), le réservoir de mélange comportant une entrée d'alimentation et un écoulement d'évacuation par l'intermédiaire desquels s'effectue une circulation du fluide, l'écoulement d'évacuation étant notamment relié à l'entrée d'alimentation par l'intermédiaire d'une conduite de retour avec une pompe de recirculation.

8. Procédé selon l'une des revendications 1 à 7, comprenant en outre : l'amenée d'eau en tant qu'un composant d'entrée du fluide, et le refroidissement de l'eau amenée.

9. Procédé selon l'une des revendications 1 à 8, comprenant en outre : la réception d'un composant d'entrée renfermant de la pulpe et/ou des fibres dans un réservoir primaire, procédé d'après lequel, notamment en combinaison avec la revendication 7, le réservoir primaire est dimensionné de manière à y recevoir l'intégralité du contenu d'une conduite de dosage pour le composant d'entrée renfermant de la pulpe et/ou des fibres, d'après lequel la conduite de dosage est prévue entre le réservoir primaire et un point d'entrée sur la conduite de retour, et d'après lequel le point d'entrée est de préférence une vanne d'entrée.

10. Procédé selon l'une des revendications 1 à 9, comprenant en outre : l'agencement d'une pompe d'extraction à une hauteur telle, que des parties constitutives véhiculant du fluide puissent se vidanger en direction de la pompe d'extraction.
